# EUROPÄISCHE PATENTSCHRIFT

(11) **EP 4 021 800 B1**
(45) Veröffentlichungstag und Bekanntmachung des Hinweises auf die Patenterteilung: **05.06.2024**
(21) Anmeldenummer: 20820269.7
(22) Anmeldetag: 31.08.2020
(51) Int. Cl.: B64C 1/12, B64C 1/06, B64C 3/18, B64C 3/20, B64C 3/26, B64F 5/10

(54) **VERFAHREN ZUM HERSTELLEN EINES TORSIONSKASTEN FÜR EINE STRUKTUR EINES FLUGZEUGS SOWIE EIN TORSIONSKASTEN FÜR EINE STRUKTUR EINES FLUGZEUGS**
MANUFACTURING METHOD FOR A TORSION BOX OF AN AIRCRAFT STRUCTURE AND TORSION BOX FOR AN AIRCRAFT STRUCTURE
PROCÉDÉ DE FABRICATION D'UN CAISSON POUR UNE STRUCTURE D'AÉRONEF ET CAISSON POUR UNE STRUCTURE D'AÉRONEF

(30) Priorität: 28.08.2019 DE 102019123012
(43) Veröffentlichungstag der Anmeldung: 06.07.2022
(73) Patentinhaber: Airbus Operations GmbH, 21129 Hamburg (DE)
(72) Erfinder: DE JONG, Claas, 21129 Hamburg (DE); SCHRÖDER, René, 21129 Hamburg (DE)
(86) Internationale Anmeldenummer: PCT/IB2020/000903
(87) Internationale Veröffentlichungsnummer: WO 2021/038302

(56) Entgegenhaltungen:
- EP-A1- 3 254 950
- US-A- 1 603 051
- US-A- 4 739 954

## Beschreibung

### TECHNISCHES GEBIET

Die Erfindung betrifft ein Verfahren zum Herstellen eines Torsionskastens für eine Struktur eines Flugzeugs sowie einen Torsionskasten für eine Struktur eines Flugzeugs.

### HINTERGRUND DER ERFINDUNG

Großformatige Bauteile aus einem Faserverbundwerkstoff können durch unterschiedliche Verfahren hergestellt werden. Neben Spritzpressverfahren sind auch Vakuuminfusionsverfahren verbreitet. Diese Verfahren basieren auf der Verwendung von Formwerkzeugen, die eine herzustellende Form des entsprechenden Bauteils vorgeben und mit einem Gelege aus einer oder mehreren Lagen eines Faserhalbzeugs versehen werden. Zum Tränken des Faserhalbzeugs mit Harz wird das hergestellte Gelege oftmals mit einer mit einer Vakuumfolie abgedeckt. Bei flächigen Bauteilen ist dies recht einfach, da die Vakuumfolie der flächigen Erstreckung des betreffenden Bauteils leicht folgen kann. Sind jedoch beispielsweise an einer Innenseite des betreffenden Bauteils längliche, parallel zueinander erstreckende Verstärkungsbauteile gewünscht, muss die Vakuumfolie auch den Verstärkungsbauteilen und den dazwischenliegenden Lücken bündig folgen. Ein Faltenwurf ist dabei zu verhindern, um die Formtreue und Integrität des Bauteils sicherzustellen.

Insbesondere bei Verkehrsflugzeugen, welche zumindest teilweise großformatige, aus Faserverbundwerkstoffen hergestellte Bauteile aufweisen, sind teilweise deutlich komplexere Versteifungsbauteile vorgesehen. Bei sogenannten Torsionskästen, welche dazu ausgebildet sind, größere Biegemomente aufzunehmen, können Verstärkungsbauteile auch quer zueinander verlaufen und sich teilweise überschneiden. Aus diesem Grunde ist es verbreitet, zur Herstellung von Torsionskästen flächige Schalen herzustellen und separat gefertigte Verstärkungsbauteile auf die Schalen zu nieten oder auf andere Weise damit zu verbinden. Der hierzu notwendige Herstellaufwand ist beträchtlich und bei dem Herstellen der Nietverbindungen ist ein Faserverlauf entsprechend anzupassen oder zu dimensionieren.

Die Schrift US 4739954 A offenbart einen Flugzeugflügel mit einer Mehrzahl von Rippenpaaren wobei jedes Rippenpaar eine erste und eine zweite Rippe aufweist, die im Wesentlichen eben und so geformt sind, dass sie mit dem Querschnitt des Flügels zusammenpassen; und mit einem ersten Hauptspantloch, das durch diese erste Rippe hindurch führt, und ein zweites Hauptspantloch welches durch die zweite Rippe hindurch führt; wobei die erste Rippe fest an die ober Oberfläche des Flügels angebunden ist und die zweite Rippe an die untere Oberfläche des Flügels angebunden ist, wobei die genannte erste und zweite Rippe so überlappen, dass eine ebene Oberfläche der ersten Rippe im Wesentlichen parallel zu einer ebenen Oberfläche der zweiten Rippe angeordnet ist; sowie ein Hauptspant, der so bemessen ist, dass er sowohl in das erste Hauptspantloch der ersten Rippe und in das zweite Hauptspantloch der zweiten Rippe eingefügt ist, wenn die obere Oberfläche zu der unteren Oberfläche ausgerichtet wird, um einen Flugzeugflügel zu bilden und dadurch die obere und die untere Oberfläche miteinander zu verbinden.

### ZUSAMMENFASSUNG DER ERFINDUNG

Es ist eine Aufgabe der Erfindung, ein Verfahren zum Herstellen eines Torsionskastens für eine Struktur eines Flugzeugs vorzuschlagen, bei dem der Arbeitsaufwand reduziert werden kann, ohne dass eine abweichende Auslegung oder ein höheres Gewicht für den hergestellten Torsionskasten resultiert.

Die Aufgabe wird gelöst durch ein Verfahren mit den Merkmalen des unabhängigen Anspruchs 1. Vorteilhafte Ausführungsformen und Weiterbildungen sind den Unteransprüchen und der nachfolgenden Beschreibung zu entnehmen.

Es wird ein Verfahren zum Herstellen eines Torsionskastens für eine Struktur eines Flugzeugs vorgeschlagen, das Verfahren aufweisend die Schritte des Bereitstellens einer ersten Komponente aus einem Faserverbundwerkstoff, die erste Komponente aufweisend eine erste flächige Basis mit einer ersten Innenseite und einer ersten Außenseite, wobei mehrere erste Versteifungselemente an der ersten Innenseite angeordnet sind und einen Verbund mit der ersten Basis bilden, des Bereitstellens einer zweiten Komponente aus einem Faserverbundwerkstoff, die zweite Komponente aufweisend eine zweite flächige Basis mit einer zweiten Innenseite und einer zweiten Außenseite, wobei mehrere zweite Versteifungselemente an der zweiten Innenseite angeordnet sind und einen Verbund mit der zweiten Basis bilden, des Aufeinandersetzens der ersten Komponente und der zweiten Komponente derart, dass sich die ersten Versteifungselemente zumindest bereichsweise auf die zweite Innenseite legen und sich die zweiten Versteifungselemente zumindest bereichsweise auf die erste Innenseite legen, und des Verbindens der ersten Versteifungselemente mit der zweiten Basis und Verbinden der zweiten Versteifungselemente mit der ersten Basis.

Ein solcher Torsionskasten könnte etwa ein Bauteil eines Flügels, eines Höhenleitwerks, eines Seitenleitwerks, einer Landeklappe oder eines anderen Strukturbauteils oder einer Struktur sein. Der Torsionskasten beschreibt ein hohles Strukturbauteil, welches dazu ausgebildet ist, ein Biegemoment um mindestens eine Achse aufzunehmen. Der Torsionskasten kann unterschiedliche Ausformungen aufweisen, die von eher würfelförmigen zu länglicheren quaderförmigen oder flächigeren Formen reichen. Die Wände des Torsionskastens müssen nicht flach sein, sondern können auch mehr oder weniger signifikante Krümmungen besitzen. Weiter nachfolgend ist der Torsionskasten durch zwei flächige, schalenartige Bauteile in Form der ersten Basis und der zweiten Basis gekennzeichnet, die in einem Abstand zueinander vorliegen und erste und zweite Versteifungselemente einschließen. Es ist besonders vorteilhaft, die erste Komponente und die zweite Komponente auf die oben angegebene Weise herzustellen.

Die erste flächige Basis wird mit ersten Versteifungselementen versehen, die einen Verbund mit der ersten Basis ausbilden. Dies kann, wie vorangehend erläutert, das Anfertigen von Gelegen und eine anschließende Infiltrierung und Aushärtung umfassen. Dazu wird zum Durchführen des Infiltrierens und während des Aushärtens eine Verschlusseinrichtung auf den Gelege angeordnet. Die Verschlusseinrichtung kann etwa in Zwischenräume zwischen den ersten Versteifungselemente geraten. Alternativ dazu können die Zwischenräume auch mit Verstärkungselementen temporär belegt werden, so dass die Verschlusseinrichtung anschließend die Gelege und die Verstärkungselemente gemeinsam überdeckt.

Dies ist bei Beschränkung auf die ersten Versteifungselemente oder die zweiten Versteifungselemente besonders vorteilhaft durchführbar, denn eine flexible Verschlusseinrichtung kann gleichmäßig angeordneten und vollständig durchgehenden Zwischenräumen ohne Faltenwurf folgen. Andererseits können die Verstärkungselemente nach dem Aushärten auch in einer Richtung aus der ersten Komponente oder der zweiten Komponente herausgeschoben werden.

Daraus resultieren einfach und mit gewöhnlichen Werkzeugen herstellbare erste und zweite Komponenten, die einen Teil der im Stand der Technik erforderlichen Verbindungen einsparen. Die erste flächige Basis und die ersten Versteifungselemente sowie die zweite flächige Basis und die zweiten Versteifungselemente bilden jeweils ein zusammenhängendes, nicht gefügtes Bauteil mit einer Innenversteifung aus. Das Aufeinandersetzen erlaubt durch jeweils einseitiges Verbinden der Versteifungsbauteile das Herstellen des Torsionskastens. Der Aufwand für das Befestigen der einzelnen Komponenten aneinander wird folglich im Wesentlichen halbiert.

Bei der Verwendung von Nietverbindungen ist ungefähr die Hälfte an entsprechenden Bohrungen notwendig, so dass eine Verbesserung des Kraftflusses und der für die Nietverbindungen notwendigen mechanischen Anpassungen im Vergleich zu ausschließlich gemieteten Komponenten zu erwarten ist.

In einer vorteilhaften Ausführungsform weist das Bereitstellen der ersten Komponente bzw. der zweiten Komponente das Ausbilden von Gelegen auf einem Formwerkzeug, das Abdecken der Gelege mit einer Verschlusseinrichtung, das Tränken der Gelege mit einem Harz, das Aushärten und das Entfernen der Verschlusseinrichtung auf. Insbesondere könnte das Verfahren in Form eines Vakuum-Infusionsverfahrens oder als Harz-Spritzpressverfahren (Resin Transfer Molding, RTM) realisiert werden. Das Gelege wird auf dem Formwerkzeug mittels einer Verschlusseinrichtung, etwa einer Vakuumfolie, rundum abgedichtet, so dass es luftdicht und formsicher auf dem Formwerkzeug gekapselt ist. Der Begriff "Harz" kann im Sinne der Erfindung ein beliebiges Matrixmaterial aufweisen, welches dazu geeignet ist, mit einem Fasermaterial ein Faserverbundbauteil zu bilden. Das Matrixmaterial kann dabei auch bereits einen Härter enthalten (Mehrkomponentenharzsystem). Harz kann sich im engeren Sinne auf duroplastische Kunststoffe, etwa Epoxidharzsysteme, beziehen. Nicht ausgeschlossen sein sollen jedoch auch thermoplastische Kunststoffe.

Das Ausbilden von Gelegen könnte das Anordnen eines Basisgeleges zum Ausbilden der Basis und von Versteifungsgelegen zum Ausbilden der Versteifungselemente aufweisen. Folglich wird ein einstückiges Verbundbauteil durch gemeinsames Aushärten von mit Harz getränkten Gelegen ermöglicht, was besonders vorteilhafte mechanische Eigenschaften im Übergangsbereich zwischen Versteifungsbauteilen und Basis besitzt sowie ein relativ geringes Gewicht aufweist.

In einer vorteilhaften Ausführungsform werden die ersten Versteifungselemente und/oder die zweiten Versteifungselemente auf ihre zugehörige Basis geklebt oder geschweißt, um den Verbund mit der zugehörigen Basis zu bilden. Das Schweißen eignet sich besonders für eine Basis und Versteifungselemente, die auf einem Material mit einer thermoplastischen Matrix basieren. Das Kleben ist weitgehend für sämtliche Materialien denkbar, die auch Duromere umfassen.

Besonders bevorzugt erstrecken sich die ersten Versteifungselemente bzw. die zweiten Versteifungselemente entlang derselben Raumrichtung. Sind mehrere Versteifungselemente auf der jeweiligen Basis angeordnet, sind diese parallel zueinander angeordnet. Die Zwischenräume zwischen den Versteifungselementen lassen sich gut mit einer flexiblen Verschlusseinrichtung formgenau und ohne Faltenwurf abdecken. Die Abstände könnten variabel ausgebildet sein, ebenso die einzelnen Bauhöhen oder Tiefenerstreckungen der Querschnittsprofile.

Bevorzugt weist das Verbinden das Anfertigen von Nietverbindungen auf. Die erste Komponente und die zweite Komponente werden demgemäß an ihren Verbindungsstellen miteinander vernietet. Die Anzahl der Nietverbindungen beträgt jedoch lediglich ungefähr der Hälfte der Nietverbindungen der vorangehend geschilderten bekannten Verfahren zum Herstellen eines Torsionskastens.

In einer vorteilhaften Ausführungsform werden die zweiten Versteifungselemente quer zu den ersten Versteifungselementen ausgerichtet. Die separate Fertigung der Versteifungselemente an der jeweiligen Basis erlauben das anschließende Verschachteln der Versteifungselemente für die robuste Konstruktion des Torsionskastens, ohne dass das Abdecken von Gelegen erschwert wird.

Die ersten Versteifungselemente werden bereichsweise zumindest teilweise unterbrochen ausgeführt, um die zweiten Versteifungselemente durchzuführen. Die ersten und zweiten Versteifungselemente können damit ein Gitter innerhalb des Torsionskastens bilden.

Bevorzugt sind die ersten Versteifungselemente als Versteifungsrippen ausgeführt. Die zweiten Versteifungselemente können weiter bevorzugt als Holme ausgeführt werden.

Die Erfindung betrifft ferner einen Torsionskasten für eine Struktur eines Flugzeugs, aufweisend eine erste Komponente aus einem Faserverbundwerkstoff, die erste Komponente aufweisend eine erste flächige Basis mit einer ersten Innenseite und einer ersten Außenseite, wobei mehrere erste Versteifungselemente an der ersten Innenseite angeordnet sind und einen Verbund mit der ersten Basis bilden, und eine zweite Komponente aus einem Faserverbundwerkstoff, die zweite Komponente aufweisend eine zweite flächige Basis mit einer zweiten Innenseite und einer zweiten Außenseite, wobei mehrere zweite Versteifungselemente an der zweiten Innenseite angeordnet sind und einen Verbund mit der zweiten Basis bilden, wobei die erste Basis und die zweite Basis derart aufeinandergesetzt sind, dass die ersten Versteifungselemente zumindest bereichsweise auf der zweiten Innenseite liegen und die zweiten Versteifungselemente zumindest bereichsweise auf der ersten Innenseite liegen, und wobei die ersten Versteifungselemente mit der zweiten Basis und die zweiten Versteifungselemente mit der ersten Basis form-, kraft- oder stoffschlüssig miteinander verbunden sind.

Besonders bevorzugt sind die ersten Versteifungselemente als Versteifungsrippen ausgeführt, wobei die zweiten Versteifungselemente als Holme ausgeführt sind und wobei die ersten und die zweiten Versteifungselemente quer zueinander angeordnet sind.

Ferner betrifft die Erfindung ein Flugzeug, aufweisend mindestens eine Komponente, die einen Torsionskasten nach der vorhergehenden Beschreibung aufweist.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
Fig. 1 zeigt ein schematisches, blockbasiertes Diagramm eines Verfahrens zum Herstellen eines Torsionskastens für eine Struktur eines Flugzeugs.
Fig. 2 zeigt die erste und die zweite Komponente in zwei unterschiedlichen Ansichten.
Fig. 3a und 3b zeigen das Herstellen einer ersten Komponente auf einem Formwerkzeug.
Fig. 4 zeigt ein Flugzeug, das einen Torsionskasten aufweist.

### DETAILLIERTE DARSTELLUNG EXEMPLARISCHER AUSFÜHRUNGSFORMEN

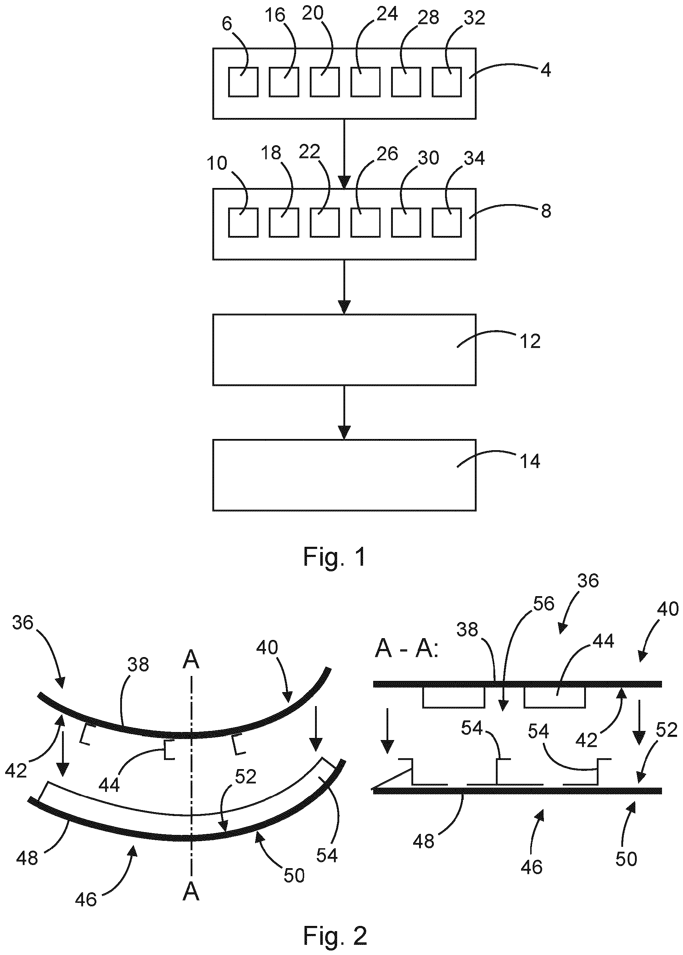

Fig. 1 zeigt ein Verfahren 2 zum Herstellen eines Torsionskastens für eine Struktur eines Flugzeugs. Das Verfahren kann gemäß der gezeigten Blockdarstellung die folgenden Schritte aufweisen. Zunächst wird eine erste Komponente aus einem Faserverbundwerkstoff bereitgestellt 4, die eine erste flächige Basis mit einer ersten Innenseite und einer ersten Außenseite aufweist, wobei mehrere erste Versteifungselemente auf der ersten Innenseite angeordnet werden 6 und einen Verbund mit der ersten Basis bilden. Anschließend wird eine zweite Komponente aus einem Faserverbundwerkstoff bereitgestellt 8. Die zweite Komponente weist eine zweite flächige Basis mit einer zweiten Innenseite und einer zweiten Außenseite auf, wobei mehrere zweite Versteifungselemente an der zweiten Innenseite angeordnet werden 10 und einen Verbund mit der zweiten Basis bilden. Anschließend werden die erste Komponente und die zweite Komponente derart aufeinander gesetzt 12, dass sich die ersten Versteifungselemente zumindest bereichsweise auf die zweite Innenseite legen und sich die zweiten Versteifungselemente zumindest bereichsweise auf die erste Innenseite legen. Dann werden die ersten Versteifungselemente mit der zweiten Basis und die zweiten Versteifungselemente mit der ersten Basis verbunden 14. Das Bereitstellen 4 bzw. 8 kann das Ausbilden 16 bzw. 18 von ersten bzw. zweiten Gelegen auf einem Formwerkzeug aufweisen, das Abdecken 20 bzw. 22, das Tränken 24 bzw. 26 mit einem Harz, das Aushärten 28 bzw. 30 und das Entfernen 32 bzw. 34. Das Ausbilden 16 bzw. 18 der Gelege kann das Anordnen 16a eines Basisgeleges zum Ausbilden der Basis und das Anordnen von Versteifungsgelegen 16b zum Ausbilden der Versteifungselemente aufweisen. Das Verbinden 14 könnte das Anfertigen von Nietverbindungen aufweisen.

Fig. 2 zeigt eine erste Komponente 36, die eine erste flächige Basis 38 aufweist. Die erste Basis 38 besitzt eine erste Außenseite 40 und eine erste Innenseite 42. An der ersten Innenseite 42 sind erste Versteifungselemente 44 angeordnet, die sich parallel zueinander entlang derselben Richtung erstrecken und beispielhaft als Rippen ausgeführt sind. Exemplarisch sind die erste Basis 38 und die ersten Versteifungselemente 44 als ein zusammenhängendes Gelege ausgebildet und können gemeinsam mit Harz infiltriert und ausgehärtet werden

Eine zweite Komponente 46 weist eine zweite Basis 48 mit einer zweiten Außenseite 50 und einer zweiten Innenseite 52 auf. Auf dieser befinden sich zweite Versteifungselemente 54, die als Holme ausgeführt sind. Wie in der Schnittdarstellung ersichtlich ist, welche in der rechten Zeichnungsebene mit A-A gekennzeichnet ist, weisen die ersten Versteifungselemente 44 mehrere Unterbrechungen 56 auf, durch die die zweiten Versteifungselemente 54, welche quer zu den ersten Versteifungselemente 44 angeordnet sind, verlaufen können. Die erste Komponente 36 und die zweite Komponente 46 werden aufeinander gesetzt und miteinander verbunden.

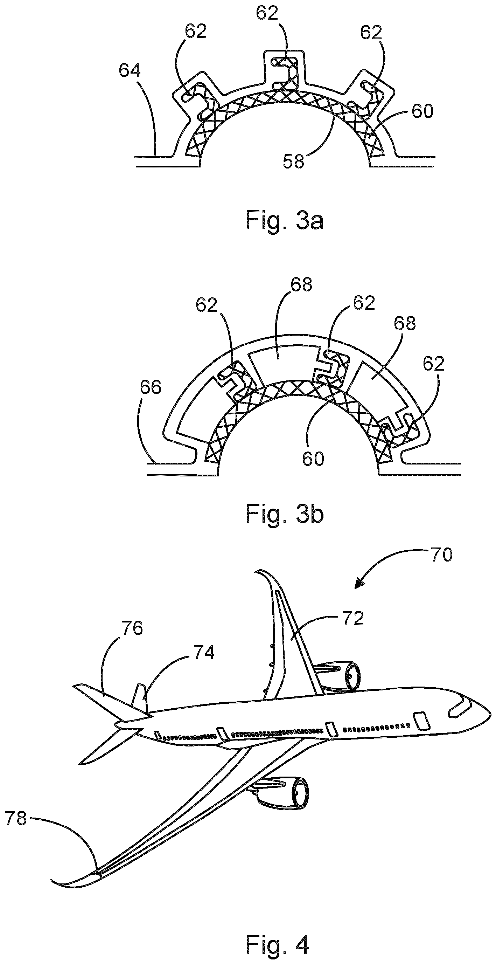

Sehr schematisch zeigt Fig. 3a ein Formwerkzeug 58, auf dem ein erstes Basisgelege 60 zum Ausbilden der ersten Basis 38 aufgelegt ist. Hieran schließen sich erste Versteifungsgelege 62 an, die auf dem ersten Basisgelege 60 angeordnet sind. Eine erste Verschlusseinrichtung 64 ist über die Gelege 60 und 62 gelegt und schließt mit dem Formwerkzeug 58 bündig ab. Zwischenräume zwischen den ersten Versteifungsgelegen 62 werden ebenso von der ersten Verschlusseinrichtung 64 abgedeckt. In dieser Position kann das Infiltrieren mit Harz erfolgen sowie das anschließende Aushärten. Das dargestellte Verfahren betrifft insbesondere ein Vakuum-Infusionsverfahren.

In Fig. 3b wird eine etwas modifizierte Variante gezeigt, bei der das erste Basisgelege 60 und die ersten Versteifungsgelege 62 aufeinander angeordnet werden. Hier ist eine andere erste Verschlusseinrichtung 66 gewählt, welche nicht in Zwischenräume zwischen den ersten Versteifungsgelegen 62 hinein verläuft. Dort sind stattdessen erste Verstärkungselemente 68 angeordnet, die die Zwischenräume in radialer Richtung ergänzen und durch die erste Verschlusseinrichtung 66 überdeckt werden. Nach dem Aushärten werden sie in einer Richtung parallel zu den ersten Versteifungsgelegen 62 bzw. den resultierenden ersten Versteifungselementen wieder entfernt. Hierzu ist es besonders günstig, dass die Versteifungsgelege 62 alle in derselben Richtung verlaufen. Die ersten Verstärkungselemente 68 können dann in derselben Richtung herausgezogen werden. Diese Darstellung betrifft insbesondere ein RTM-Verfahren.

Für die Herstellung der zweiten Komponente 46 werden analog zu Fig. 3a oder 3b geformte Einrichtungen verwendet.

Fig. 4 zeigt nun ein Flugzeug 70, welches mehrere Strukturkomponenten in Form von Flügeln 72, Höhenleitwerken 74 und Seitenleitwerk 76 aufweist. Mindestens eine dieser Strukturkomponenten 72, 74 und 76 kann mit einem vorangehend dargestellt hergestellten Torsionskasten ausgestattet werden. Beispielhaft ist ein Torsionskasten 78 gestrichelt an einem Ende einer der Flügel 72 angedeutet.

Ergänzend sei darauf hingewiesen, dass "aufweisend" keine anderen Elemente oder Schritte ausschließt, und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### BEZUGSZEICHEN

- 2: Verfahren
- 4: Bereitstellen erster Komponente
- 6: Anordnen erster Versteifungselemente
- 8: Bereitstellen zweiter Komponente
- 10: Anordnen zweiter Versteifungselemente
- 12: Aufeinandersetzen
- 14: Verbinden
- 16: Ausbilden erster Gelege
- 18: Ausbilden zweiter Gelege
- 20: Abdecken erster Gelege
- 22: Abdecken zweiter Gelege
- 24: Tränken erster Gelege
- 26: Tränken zweiter Gelege
- 28: Aushärten erster Gelege
- 30: Aushärten zweiter Gelege
- 32: Entfernen Verschlusseinrichtung
- 34: Entfernen Verschlusseinrichtung
- 36: erste Komponente
- 38: erste Basis
- 40: erste Außenseite
- 42: erste Innenseite
- 44: erste Versteifungselemente
- 46: zweite Komponente
- 48: zweite Basis
- 50: zweite Außenseite
- 52: zweite Innenseite
- 54: zweite Versteifungselemente
- 56: Unterbrechungen
- 58: Formwerkzeug
- 60: erstes Basisgelege
- 62: erste Versteifungsgelege
- 64: erste Verschlusseinrichtung
- 66: erste Verschlusseinrichtung
- 68: erste Verstärkungselemente
- 70: Flugzeug
- 72: Flügel
- 74: Höhenleitwerk
- 76: Seitenleitwerk
- 78: Torsionskasten

## Patentansprüche

1. Verfahren (2) zum Herstellen eines Torsionskastens (78) für eine Struktur eines Flugzeugs (70), aufweisend die Schritte:
- Bereitstellen (4) einer ersten Komponente (36) aus einem Faserverbundwerkstoff, die erste Komponente (36) aufweisend eine erste flächige Basis (38) mit einer ersten Innenseite (42) und einer ersten Außenseite (40), wobei mehrere erste Versteifungselemente (44) an der ersten Innenseite (42) angeordnet werden (6) und einen Verbund mit der ersten Basis (38) bilden,
- Bereitstellen (8) einer zweiten Komponente (46) aus einem Faserverbundwerkstoff, die zweite Komponente (46) aufweisend eine zweite flächige Basis (48) mit einer zweiten Innenseite (52) und einer zweiten Außenseite (50), wobei mehrere zweite Versteifungselemente (54) an der zweiten Innenseite (52) angeordnet werden und einen Verbund mit der zweiten Basis (48) bilden,
- Aufeinandersetzen (12) der ersten Komponente (36) und der zweiten Komponente (46) derart, dass sich die ersten Versteifungselemente (44) zumindest bereichsweise auf die zweite Innenseite (52) legen und sich die zweiten Versteifungselemente (54) zumindest bereichsweise auf die erste Innenseite (42) legen,
**gekennzeichnet durch**
- Verbinden (14) der ersten Versteifungselemente (44) mit der zweiten Basis (48) und Verbinden (14) der zweiten Versteifungselemente (54) mit der ersten Basis (38).

2. Verfahren (2) nach Anspruch 1,
wobei das Bereitstellen (4, 8) der ersten Komponente (36) bzw. der zweiten Komponente (46) das Ausbilden (16, 18) von Gelegen (60, 62) auf einem Formwerkzeug (58), das Abdecken (20, 22) der Gelege (60, 62) mit einer Verschlusseinrichtung (64, 66), das Tränken (24, 26) der Gelege (60, 62) mit einem Harz, das Aushärten (28, 30) und das Entfernen (32, 34) der Verschlusseinrichtung (64, 66) aufweist.

3. Verfahren (2) nach Anspruch 2,
wobei das Ausbilden (16, 18) von Gelegen (60, 62) das Anordnen eines Basisgeleges (60) zum Ausbilden der Basis (38, 48) und von Versteifungsgelegen (62) zum Ausbilden der Versteifungselemente (44, 54) aufweist.

4. Verfahren (2) nach Anspruch 1 oder 2,
wobei die ersten Versteifungselemente (44) und/oder die zweiten Versteifungselemente (54) auf ihre zugehörige Basis (38, 48) geklebt oder geschweißt werden, um den Verbund mit der zugehörigen Basis (38, 48) zu bilden.

5. Verfahren (2) nach einem der vorhergehenden Ansprüche,
wobei sich die ersten Versteifungselemente (44) bzw. die zweiten Versteifungselemente (54) entlang derselben Raumrichtung erstrecken.

6. Verfahren (2) nach einem der vorhergehenden Ansprüche, wobei das Verbinden (14) das Anfertigen von Nietverbindungen aufweist.

7. Verfahren (2) nach einem der vorhergehenden Ansprüche,
wobei die zweiten Versteifungselemente (54) quer zu den ersten Versteifungselementen (44) ausgerichtet werden.

8. Verfahren (2) nach Anspruch 7,
wobei die ersten Versteifungselemente (44) bereichsweise zumindest teilweise unterbrochen ausgeführt werden, um die zweiten Versteifungselemente (54) durchzuführen.

9. Verfahren (2) nach einem der vorhergehenden Ansprüche,
wobei die ersten Versteifungselemente (44) als Versteifungsrippen ausgeführt werden.

10. Verfahren (2) nach einem der vorhergehenden Ansprüche,
wobei die zweiten Versteifungselemente (54) als Holme ausgeführt werden.

11. Torsionskasten (78) für eine Struktur eines Flugzeugs, aufweisend:
- eine erste Komponente (36) aus einem Faserverbundwerkstoff, die erste Komponente (36) aufweisend eine erste flächige Basis (38) mit einer ersten Innenseite (42) und einer ersten Außenseite (40), wobei mehrere erste Versteifungselemente (44) an der ersten Innenseite (42) angeordnet sind und einen Verbund mit der ersten Basis (38) bilden, und
- eine zweite Komponente (46) aus einem Faserverbundwerkstoff, die zweite Komponente (46) aufweisend eine zweite flächige Basis (48) mit einer zweiten Innenseite (52) und einer zweiten Außenseite (50), wobei mehrere zweite Versteifungselemente (54) an der zweiten Innenseite (50) angeordnet sind und einen Verbund mit der zweiten Basis (48) bilden,
wobei die erste Basis (38) und die zweite Basis (48) derart aufeinandergesetzt sind, dass die ersten Versteifungselemente (44) zumindest bereichsweise auf der zweiten Innenseite (52) liegen und die zweiten Versteifungselemente (54) zumindest bereichsweise auf der ersten Innenseite (42) liegen, und
wobei die ersten Versteifungselemente (44) mit der zweiten Basis (48) und die zweiten Versteifungselemente (54) mit der ersten Basis (38) form-, kraft- oder stoffschlüssig miteinander verbunden sind.

12. Torsionskasten (78) nach Anspruch 11,
wobei die ersten Versteifungselemente (44) als Versteifungsrippen ausgeführt sind,
wobei die zweiten Versteifungselemente (54) als Holme ausgeführt sind und
wobei die ersten und die zweiten Versteifungselemente (44, 54) quer zueinander angeordnet sind.

13. Flugzeug (70), aufweisend mindestens eine Strukturkomponente (72, 74, 76), in die mindestens ein Torsionskasten (78) nach Anspruch 11 oder 12 integriert ist.

## Claims

1. Method (2) for producing a torsion box (78) for a structure of an aircraft (70), comprising the steps:
- Providing (4) a first component (36) from a
Fiber composite material, the first component (36) having a first flat base (38) with a first inside (42) and a first outside (40), with a plurality of first stiffening elements (44) being arranged on the first inside (42) (6) and an association with the form the first base (38),
- Providing (8) a second component (46) made of a fiber composite material, the second component (46) having a second flat base (48) with a second inside (52) and a second outside (50), wherein a plurality of second stiffening elements (54) at the second inside (52) can be arranged and a composite with the form a second base (48),
- Placing (12) the first component (36) and the second component (46) on top of each other in such a way that the first stiffening elements (44) lie at least partially on the second inside (52) and the second stiffening elements (54) at least partially on the first Lay inside (42),
**Characterized by**
- Connecting (14) the first stiffening elements (44) to the second base (48) and connecting (14) the second stiffening elements (54) to the first base (38).

2. Method (2) according to claim 1,
wherein the provision (4, 8) of the first component (36) or the second component (46) involves the formation (16, 18) of layers (60, 62) on a mold (58). , covering (20, 22) the scrims (60, 62) with a closure device (64, 66), soaking (24, 26) the scrims (60, 62) with a resin, curing (28, 30) and the removal (32, 34) of the closure device (64, 66).

3. Method (2) according to claim 2,
wherein the formation (16, 18) of fabrics (60, 62) involves arranging a base fabric (60) for forming the base (38, 48) and stiffening fabrics (62) for forming the stiffening elements (44, 54).

4. Method (2) according to claim 1 or 2,
wherein the first stiffening elements (44) and / or the second stiffening elements (54) are glued or welded to their associated base (38, 48) to achieve the composite with the associated base (38, 48).

5. Method (2) according to one of the preceding claims,
wherein the first stiffening elements (44) or the second Stiffening elements (54) extend along the same spatial direction.

6. Method (2) according to one of the preceding claims,
wherein the connecting (14) comprises making rivet connections.

7. Method (2) according to one of the preceding claims,
wherein the second stiffening elements (54) are aligned transversely to the first stiffening elements (44).

8. Method (2) according to claim 7,
wherein the first stiffening elements (44) are designed to be at least partially interrupted in some areas in order to pass through the second stiffening elements (54).

9. Method (2) according to one of the preceding claims,
wherein the first stiffening elements (44) are designed as stiffening ribs become.

10. Method (2) according to one of the preceding claims,
wherein the second stiffening elements (54) are designed as spars.

11. Torsion box (78) for a structure of an aircraft, comprising:
- a first component (36) made of a fiber composite material, the first Component (36) comprising a first flat base (38) with a first inside (42) and a first outside (40), wherein a plurality of first stiffening elements (44) are arranged on the first inside (42) and a composite with the first base (38) form, and
- a second component (46) made of a fiber composite material, which second component (46) having a second flat base (48) with a second inside (52) and a second outside (50), wherein a plurality of second stiffening elements (54) are arranged on the second inside (50) and a composite with the second form base (48),
wherein the first base (38) and the second base (48) are placed one on top of the other in this way are that the first stiffening elements (44) lie at least partially on the second inside (52) and the second stiffening elements (54) lie at least partially on the first inside (42), and
wherein the first stiffening elements (44) with the second base (48) and the second stiffening elements (54) with the first base (38) in shape, force or are cohesively connected to each other.

12. Torsion box (78) according to claim 11,
wherein the first stiffening elements (44) are designed as stiffening ribsare,
wherein the second stiffening elements (54) are designed as spars and
wherein the first and second stiffening elements (44, 54) are arranged transversely to one another.

13. Airplane (70), having at least one structural component (72, 74, 76), in which at least one torsion box (78) according to claim 11 or 12 is integrated.

## Revendications

1. Procédé (2) de réalisation d'un caisson de torsion (78) pour une structure d'avion (70), comprenant les étapes :
- Fournir (4) un premier composant (36) d'un Fibre matériau composite, le premier composant (36) ayant une première base plate (38) avec un premier intérieur (42) et un premier extérieur (40), avec une pluralité de premiers des éléments de raidissement (44) étant disposés sur le premier intérieur (42) (6) et un association avec la forme la première base (38),
- Fournir (8) un deuxième composant (46) constitué d'un matériau composite fibreux, le deuxième composant (46) ayant une deuxième base plate (48) avec un deuxième intérieur (52) et un deuxième extérieur (50), dans lequel une pluralité de des deuxièmes éléments de renforcement (54) au niveau du deuxième intérieur (52) peuvent être disposés et un composite formant une deuxième base (48),
- Placer (12) le premier composant (36) et le deuxième composant (46) l'un sur l'autre de telle sorte que les premiers éléments de raidissement (44) reposent au moins partiellement sur le deuxième intérieur (52) et les seconds éléments de raidissement (54) au moins partiellement sur le premier Poser à l'intérieur (42),
**Caractérisé par**
- Connexion (14) du premier éléments de raidissement (44) à la seconde base (48) et relier (14) les seconds éléments de raidissement (54) à la première base (38).

2. Procédé (2) selon la revendication 1,
dans lequel la fourniture (4, 8) du premier composant (36) ou du deuxième composant (46) implique la formation (16, 18) de couches (60, 62) sur un moule (58), recouvrir (20, 22) les canevas (60, 62) avec un dispositif de fermeture (64, 66), tremper (24, 26) les canevas (60, 62) avec une résine, durcir (28, 30) et retirer (32, 34) du dispositif de fermeture (64, 66).

3. Procédé (2) selon la revendication 2,
dans lequel la formation (16, 18) de tissus (60, 62) implique la disposition d'un tissu de base (60) pour former la base (38, 48) et de tissus de raidissement (62) pour former les éléments de raidissement (44, 54).

4. Procédé (2) selon la revendication 1 ou 2,
dans lequel les premiers éléments raidisseurs (44) et/ou les deuxièmes éléments raidisseurs (54) sont collés ou soudés à leur base associée (38, 48) pour réaliser le composite avec la base associée (38, 48).

5. Procédé (2) selon l'une des revendications précédentes,
dans lequel les premiers éléments de raidissement (44) ou les seconds éléments de raidissement (54) s'étendent le long de la même direction spatiale.

6. Procédé (2) selon l'une des revendications précédentes,
dans lequel la connexion (14) comprend la réalisation de connexions par rivets.

7. Procédé (2) selon l'une des revendications précédentes,
dans lequel les seconds éléments de raidissement (54) sont alignés transversalement aux premiers éléments de raidissement (44).

8. Procédé (2) selon la revendication 7,
dans lequel les premiers éléments de raidissement (44) sont conçus pour être au moins partiellement interrompus dans certaines zones afin de traverser les seconds éléments de raidissement (54).

9. Procédé (2) selon l'une des revendications précédentes,
dans lequel les premiers éléments de raidissement (44) sont conçus sous forme de nervures de raidissement.

10. Procédé (2) selon l'une des revendications précédentes,
dans lequel les deuxièmes éléments de renforcement (54) sont conçus sous forme de longerons.

11. Caisson de torsion (78) pour structure d'aéronef, comprenant :
- un premier composant (36) constitué d'un matériau composite fibreux, le premier composant (36) comprenant une première base plate (38) avec un premier intérieur (42) et un premier extérieur (40), dans lequel une pluralité de premiers éléments de raidissement ( 44) sont disposés sur le premier intérieur (42) et forment un composite avec la première base (38), et
- un deuxième composant (46) constitué d'un matériau composite fibreux, lequel deuxième composant (46) ayant une deuxième base plate (48) avec un deuxième intérieur (52) et un deuxième extérieur (50), dans lequel une pluralité de deuxièmes éléments de raidissement ( 54) sont disposés sur le deuxième intérieur (50) et en composite avec la deuxième base de forme (48),
dans lequel la première base (38) et la deuxième base (48) sont placées l'une sur l'autre de telle sorte que les premiers éléments de raidissement (44) reposent au moins partiellement sur le deuxième intérieur (52) et les deuxièmes éléments de raidissement (54) reposent au moins partiellement sur le premier intérieur (42), et
dans lequel les premiers éléments de raidissement (44) avec la seconde base (48) et les seconds éléments de raidissement (54) avec la première base (38) sont reliés en forme, en force ou de manière cohésive les uns aux autres.

12. Caisson de torsion (78) selon la revendication 11,
dans lequel les premiers éléments de renforcement (44) sont réalisés sous forme de nervures de renforcement,
dans lequel les deuxièmes éléments de renforcement (54) sont conçus sous forme de longerons et
dans lequel les premier et deuxième éléments de raidissement (44, 54) sont disposés transversalement l'un par rapport à l'autre.

13. Avion (70), comportant au moins un élément structurel (72, 74, 76), dans lequel est intégré au moins un caisson de torsion (78) selon la revendication 11 ou 12.
